(19) Europäisches Patentamt
European Patent Office
Office européen des brevets

(11) **EP 0 653 048 B1**

(12) **EUROPÄISCHE PATENTSCHRIFT**

(45) Veröffentlichungstag und Bekanntmachung des Hinweises auf die Patenterteilung:
**26.03.1997   Patentblatt 1997/13**

(21) Anmeldenummer: **93914630.4**

(22) Anmeldetag: **14.07.1993**

(51) Int Cl.⁶: **G01B 11/02**

(86) Internationale Anmeldenummer:
**PCT/DE93/00628**

(87) Internationale Veröffentlichungsnummer:
**WO 94/03775 (17.02.1994 Gazette 1994/05)**

(54) **VERFAHREN ZUR LAGEBESTIMMUNG EINES POSITIONIERKÖRPERS RELATIV ZU EINEM BEZUGSKÖRPER UND VORRICHTUNG ZUR DURCHFÜHRUNG DES VERFAHRENS**

PROCESS FOR DETERMINING THE LOCATION OF A POSITIONING BODY IN RELATION TO A REFERENCE BODY AND DEVICE FOR IMPLEMENTING THE PROCESS

PROCEDE PERMETTANT DE DETERMINER LA POSITION D'UN CORPS DE POSITIONNEMENT PAR RAPPORT A UN CORPS DE REFERENCE ET DISPOSITIF DE MISE EN OEUVRE DUDIT PROCEDE

(84) Benannte Vertragsstaaten:
**DE FR GB**

(30) Priorität: **31.07.1992   DE 4225270**

(43) Veröffentlichungstag der Anmeldung:
**17.05.1995   Patentblatt 1995/20**

(73) Patentinhaber: **E.M.S. TECHNIK GMBH**
**26789 Leer (DE)**

(72) Erfinder: **KELLNER, Helmut**
**D-26802 Moormerland-Veenh. (DE)**

(74) Vertreter: **Patentanwälte Thömen & Körner**
**Zeppelinstrasse 5**
**30175 Hannover (DE)**

(56) Entgegenhaltungen:
**EP-A- 0 390 725          DE-C- 4 104 602**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Lagebestimmung eines Positionierkörpers relativ zu einem Bezugskörper nach dem Oberbegriff des Patentanspruchs 1 und eine Vorrichtung zur Durchführung des Verfahrens.

Ein solches Verfahren dient z. B. dazu, bei der Steuerung von Meß- und Fertigungsmaschinen Wegstrecken zwischen längsverschieblichen Gegenständen, wie Meßköpfen, Greif- oder Montagearmen zu erfassen. Dabei ist die Genauigkeit, mit der diese Wegstrecken ermittelt werden können, von ausschlaggebender Bedeutung für die Fertigungsgenauigkeit des Automaten.

Aus der DE-OS 39 09 856 ist bereits ein Verfahren bekannt, das eine hohe Meßgenauigkeit unabhängig von einer exakten Führung des Abtasters ermöglicht. Dabei werden von einem Abtaster drei Marken eines Maßstabes ausgewertet. Bei zwei Marken wäre der zwischen einem Projektionszentrum und diesen Marken gebildete Projektionswinkel noch davon abhängig, in welchem Abstand sich das Projektionszentrum über den Marken befindet und wie weit er seitlich versetzt ist. Bei drei Marken gelingt es, über den weiteren Projektionswinkel zwischen dem Projektionszentrum, dieser weiteren Marke und einer der anderen Marken das Projektionszentrum exakt zu bestimmen. Für eine Kombination von zwei Kombinationswinkeln existiert nämlich nur ein einziger Ort, auf dem sich das Projektionszentrum befinden kann.

Zusätzlich ist aus der DE-PS 41 04 602 bekannt, die Koordinaten des Projektionszentrums einer Abbildungsoptik aus den bekannten Koordinaten von Marken auf der Maßstabsanordnung über die projektive Verwandtschaft zwischen der Projektionsfläche des Abtasters und der Ebene der Maßstabsanordnung zu berechnen. Die Marken erhalten ihre Koordinateninformation bezüglich der Maßstabsanordnung in kodierter Form. Die Koordinateninformation wird bei der Berechnung dekodiert.

Weiterhin ist aus dem Buch von G. Konecny und G. Lehmann: Photogrammetrie, 4. Auflage, de Gruyter, Berlin - New York, 1984, S. 48 - 55 für sich bekannt, zur Koordinatenbestimmung eine projektive Verwandtschaft auszunutzen und einen Neigungswinkel zwischen einer Projektionsfläche und einer Urbildebene zu berücksichtigen. Zur Herstellung der Projektivität zwischen zwei Ebenen werden vier bekannte Punkte herangezogen.

Der Erfindung liegt die Aufgabe zugrunde, alle Lageparameter der Lage eines Positionierkörpers gegenüber einem Bezugskörper mit einem einzigen Abtaster zu erfassen.

Diese Aufgabe wird bei dem im Oberbegriff des Patentanspruchs 1 beschriebenen Verfahren durch die im Kennzeichen angegebenen Merkmale sowie durch die Vorrichtung zur Durchführung des Verfahrens nach Patentanspruch 7 gelöst.

Bei der Erfindung enthalten die Marken die Absolutinformation ihrer Koordinaten auf der Maßstabsanordnung in kodierter Form. Die Kodierung ist als unterschiedliche Strichbreite realisiert. Die Schwerpunkte der Überschneidungsbereiche der Marken entsprechen dabei exakt den Orten, die durch die Kodierung beschrieben sind.

Über die projektive Verwandtschaft besteht eine Beziehung zwischen den Koordinaten auf dem Positionierkörper, also der die Marken tragenden Ebene der Maßstabsanordnung und der Projektionsfläche des Abtasters. Die Beziehung läßt sich mathematisch durch die Gleichungen der kollinearen Transformation beschreiben, die in ihrer allgemeinen Formel lautet:

$$X = \frac{a_1 * X' + a_2 * Y' + a_3}{c_1 * X' + c_2 * Y' + 1}$$

$$Y = \frac{b_1 * X' + b_2 * Y' + b_3}{c_1 * X' + c_2 * Y' + 1}$$

Es handelt sich hierbei um zwei Gleichungen mit acht Unbekannten. Durch die Auswahl von vier Schwerpunkten gelingt es nun, acht Gleichungen aufzustellen und auf diese Weise die acht Unbekannten zu bestimmen. Damit ist es möglich, alle Parameter zur Festlegung der räumlichen Lage eines Positionierkörpers relativ zu einem Bezugskörper anzugeben (sechs Freiheitsgrade).

Die exakte Berechnung kann mit den in Anspruch 2 angegebenen Formeln durchgeführt werden, die bereits nach den Koordinaten des Projektionszentrums und den Orientierungswinkeln zwischen der Projektionsfläche des Abtasters und der Ebene der Maßstabsanordnung aufgelöst sind.

Eine Weiterbildung sieht vor, daß mehr als vier Schwerpunkte von Überschneidungsbereichen der Marken bei der Flächenmaßstäbe bestimmt werden und daß eine Ausgleichsrechnung vorgenommen wird.

Bei mehr als vier Schwerpunkten ergibt sich eine Überbestimmung. Durch Einbeziehung dieser weiteren Schwerpunkte in die Berechnung kann das Meßergebnis durch Ausgleichsrechnung verbessert werden. Ungenauigkeiten in der mechanischen Ausgestaltung der Marken und des Abtasters, optische Fehler sowie Rundungsfehler bei der Rechnung lassen sich so reduzieren.

Weiterhin ist vorgesehen, daß ausschließlich die Überschneidungsbereiche der Marken auf dem Abtaster abgebildet werden.

Durch diese Maßnahme läßt sich ein besserer Kontrast bei der Auswertung der Helligkeitsunterschiede in Zeilen- und Spaltenrichtung des Pixelfeldes eines Abtasters erzielen. Außerdem sind so die Überschneidungsbereiche exakt gegen das Umfeld abgegrenzt, wodurch sich die Berechnung der Schwerpunkte vereinfacht.

Bei der Auswertung können die Überschneidungsbereiche der Marken nach Koordinatenrichtung getrennt ausgewertet werden, indem nach dem Verfahren der Randverteilung die absoluten Häufigkeiten der Helligkeitswerte der Überschneidungsbereiche der Marken in Spalten- und Zeilenrichtung der lichtempfindlichen Pixel des Abtasters bestimmt werden und mit einem Schwellwert verglichen werden. Die über dem Schwellwert liegenden Häufigkeiten werden dann als die von den Marken belegten Koordinaten gewertet.

Das Verfahren ermöglicht es, durch einfaches zeilen- bzw. spaltenweises Summieren der Helligkeiten des Pixelfeldes ein Signal zu erzeugen, das eine Funktion der örtlichen Lage der Marken darstellt. Durch die Einfügung eines Schwellwertes lassen sich Störsignale und Randunschärfen, die bei nicht paralleler Ausrichtung der Marken gegenüber der Ausrichtung der Zeilen und Spalten des Pixelfeldes entstehen, mindern.

Weiterhin ist vorgesehen, daß die Schwerpunkte der Überschneidungsbereiche der Marken durch Mittelwertbildung in bciden Koordinatenrichtungen gewonnen werden, indem jeweils Pixelfelder des Abtasters als Suchfelder ausgebildet werden und in jedem Suchfeld die Koordinaten des Schwerpunktes XS und YS nach den Schwerpunktgleichungen

$$X_S = \frac{1}{N_{Lok}} * \sum_{i=1}^{N_{Lok}} X_i$$

$$Y_S = \frac{1}{N_{Lok}} * \sum_{i=1}^{N_{Lok}} Y_i$$

bestimmt werden.

Diese Vorgehensweise liefert auch dann den Schwerpunkt, wenn die Marke durch mechanische oder optische Einflüsse eine unregelmäßige Ausgestaltung aufweist.

Weiterbildungen und vorteilhafte Ausgestaltungen von Verfahren und Vorrichtung ergeben sich aus den Ansprüchen, der weiteren Beschreibung und der Zeichnung, anhand der die Erfindung näher beschrieben wird.

In der Zeichnung zeigen:

Fig. 1    eine schematische perspektivische Ansicht eines Positionierkörpers relativ zu einem Bezugskörper mit einem Abtaster,

Fig. 2    eine Draufsicht auf einen Abtaster mit abgebildeten Marken zur Veranschaulichung des Verfahrens der Randverteilung und

Fig. 3    eine vergrößerte Draufsicht auf einen Abtaster zur Veranschaulichung der Schwerpunktbestimmung.

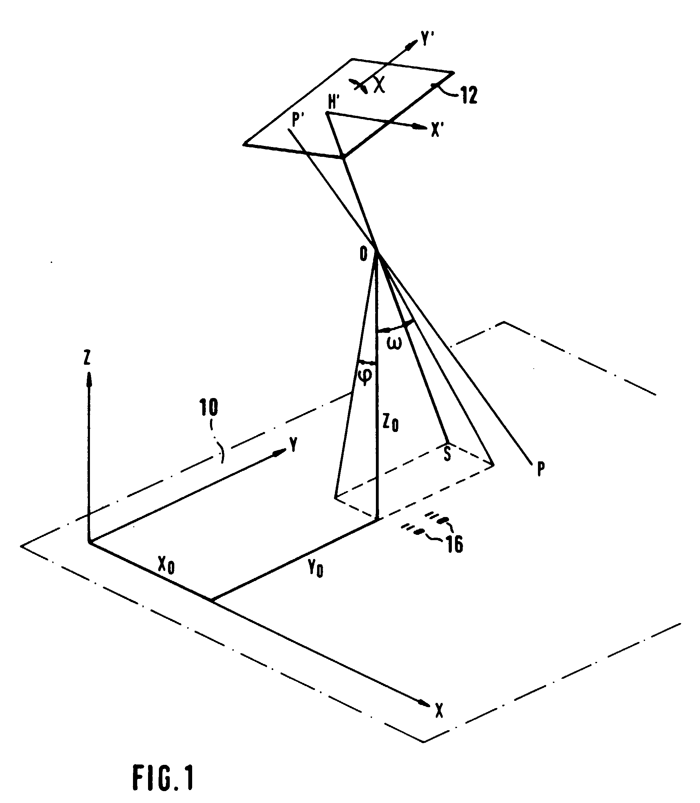

Fig. 1 zeigt eine schematische perspektivische Ansicht eines Positionierkörpers mit einer eine Maßstabsanordnung aufweisenden Ebene 10 relativ zu einem Bezugskörper mit einem Abtaster 12. Der Abtaster 12 ist mit einer Abbildungsoptik versehen, deren Projektionszentrum im Punkt O liegt. Auf die Darstellung der Abbildungsoptik wurde aus Gründen der Übersichtlichkeit verzichtet, da für die Angabe der Parameter nur die Lage des Projektionszentrums O von Bedeutung ist.

Die Lageparameter, welche die Lage des Positionierkörpers relativ zu dem Bezugskörper beschreiben, sind einmal durch die Koordinaten $X_0$, $Y_0$ und $Z_0$ gegeben. Die weitere Festlegung der Lage erfolgt durch die Orientierungswinkel æ, $f$, w zwischen der Projektionsfläche des Abtasters 12 und der Ebene 10 der Maßstabsanordnung. Dabei ist æ der Orientierungswinkel zur Z-Achse, $f$ der Orientierungswinkel zur Y-Achse und w der Orientierungswinkel zur X-Achse. In Fig. 1 sind diese Winkel auf eine Hilfslinie bezogen, die von einem Lotfußpunkt H' der Projektionsfläche durch das Projektionszentrum O zu einem Durchstoßpunkt S mit der Ebene 10 des Positionierkörpers führt.

Nach den Gleichungen der kollinearen Transformation, die die projektive Verwandtschaft zwischen einer Grundebene und einer Bildebene beschreiben, sind acht Gleichungen mit acht Unbekannten aufzulösen. Hierzu werden die abgebildeten Koordinaten von vier Punkten des Positionierkörpers ausgewertet. Aus Gründen der Übersichtlichkeit ist in Fig. 1 nur ein Punkt P auf der Ebene 10 des Positionierkörpers dargestellt, der als Punkt P' auf der Projektionsfläche des Abtasters 12 abgebildet wird.

Bei Kenntnis der Koordinaten dieser Punkte können diese in die nachfolgend aufgeführten Gleichungen eingesetzt werden, die bereits nach $X_0$, $Y_0$, $Z_0$ sowie nach æ, $f$ und w aufgelöst sind.

$$X_0 = a_3 - Z_0 * \left(\frac{\tan(\delta)}{c} * \sin(\sqrt{\phantom{x}})\right)$$

$$Y_0 = b_3 - Z_0 * \left(\frac{\tan(\delta)}{c} * \cos(\sqrt{\phantom{x}})\right)$$

$$Z_0 = \frac{\left(\frac{a_1}{c_1} - \frac{a_2}{c_2}\right)}{\left(\frac{k_2}{c_1} - \frac{k}{c_2}\right) * \cos(\sqrt{\phantom{x}}) + \left(\frac{k_3}{c_1} - \frac{k_6}{c_2}\right) * \sin(\sqrt{\phantom{x}})}$$

$$æ = \arctan\left(\frac{c_1}{c_2}\right)$$

$$f = \arctan \left( \frac{Z_0 * \tan(\delta) * \sin(\sqrt{})}{Z_0} \right)$$

$$w = \arctan \left( \frac{Z_0 * \tan(\delta) * \cos(\sqrt{})}{Z_0} \right)$$

mit

$$\delta = \arctan \left( - \frac{(c_1 + c_2) * c}{\sin(\text{æ}) + \cos(\text{æ})} \right)$$

$$\sqrt{} = \arctan \left( \frac{k_5 * k_7 - k_2}{k_1 + k_2 - k_7 * (k_4 + k_6)} \right)$$

$$k_1 = c_1 * \frac{\tan(\delta)}{c}$$

$$k_2 = \frac{\cos(\text{æ})}{c * \cos(\delta)}$$

$$k_3 = \frac{\sin(\text{æ})}{c}$$

$$k_4 = c_2 * \frac{\tan(\delta)}{c}$$

$$k_5 = - \frac{\sin(\text{æ})}{c * \cos(\delta)}$$

$$k_6 = \frac{\cos(\text{æ})}{c}$$

$$k_7 = \frac{c_1 * a_3 - a_1}{c_2 * a_3 - a_2}$$

Dabei sind æ der Orientierungswinkel zur Z-Achse, $f$ der Orientierungswinkel zur Y-Achse, w der Orientierungswinkel zur X-Achse, c die Kammerkonstante entsprechend dem Abstand zwischen dem Projektionszentrum O und dem Lotfußpunkt H' des Bezugskörpers und $a_1$, $a_2$, $a_3$, $b_3$, $c_1$, $c_2$ stellen Transformationskonstanten dar.

Die Durchführung dieser Maßnahme erfolgt in einem Rechner, der die kodierten Koordinaten der auszuwertenden Punkte zunächst dekodiert, dann die Schwerpunkte der Marken bestimmt und die Rechenschritte zur Erzielung der Lageparameter automatisch durchführt. Der Rechner kann auch so gesteuert sein, daß er mehr als vier Punkte bei der Berechnung auswertet. Es ist dann möglich, durch eine Ausgleichsrechnung nach Gauss eine höhere Genauigkeit zu erzielen.

Der Positionierkörper umfaßt eine Maßstabsanordnung mit Marken 16, deren Schwerpunkte $X_s$, $Y_s$ in konstanten Abständen angeordnet sind. Die Marken 16 besitzen unterschiedliche Strichbreiten mittels der ihre Koordinaten kodiert sind. Die Dekodierung der Strichbreite mehrerer nebeneinander liegender Marken 16 enthaltenden Kodes ermöglicht es, die absoluten Koordinaten der Marken 16 auf den Flächenmaßstab anzugeben. Da auf dem Flächenmaßstab in beiden Koordinatenrichtungen, also orthogonal aufeinander Marken 16 angeordnet sind, liefert der Kode die Flächenkoordinaten.

Bei bevorzugten Flächenmaßstäben sind die Marken 16 nicht in der jeweiligen Koordinatenquerrichtung durchgezogen, sondern es sind nur die Überschneidungsbereiche der Marken 16 unterschiedlicher Koordinatenrichtungen dargestellt. Es ergibt sich so ein Muster aus Rechtecken unterschiedlicher Seitenlängen.

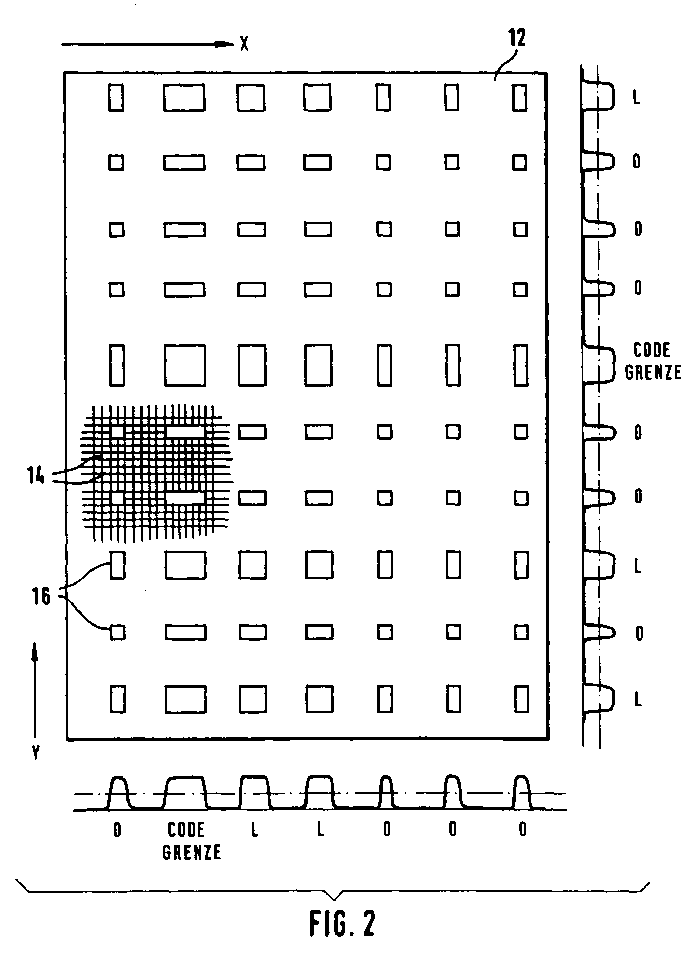

Fig. 2 zeigt eine Darstellung der Projektionsfläche des Abtasters 12, bei der Pixel 14 in Spalten- und Zeilenrichtung angeordnet sind. Die abgebildeten Marken 16 belegen hier mehrere Pixel 14. Die Auswertung der Marken 16 erfolgt nach dem Verfahren der Randverteilung. Um die Häufigkeiten zu ermitteln, in denen auf den Pixeln 14 Marken 16 abgebildet sind, werden für die X-Richtung, also die Spaltenrichtung die Helligkeiten sämtlicher in einer Spalte liegenden Pixel 14 aufaddiert. Dies geschieht durch zeilenweise Integration. Die Ermittlung der Häufigkeiten in Y-Richtung, also in Zeilenrichtung erfolgt analog durch Summierung der Helligkeiten für jede Pixelzeile, also Integration der Helligkeiten in Spaltenrichtung.

An zwei Seiten des Abtasters 12 sind Signale aufgetragen, die die Randverteilung der absoluten Häufigkeiten veranschaulicht. Wird ein Schwellwert festgelegt, so können die oberhalb des Schwellwertes liegenden Signale eindeutig den Marken 16 zugeordnet werden, die in der jeweiligen Koordinatenrichtung liegen. Aus der örtlichen Breite der Signale in Kombination mit den Signalen, die durch benachbarte Marken 16 erzeugt werden, lassen sich die kodiert angegebenen Koordinaten der Marken 16 dekodieren. Es ist somit möglich, die absolute Lage jeder einzelnen Marke 16 auf der Ebene 10 des Positionierkörper anzugeben, obwohl nur ein Teil dieser Ebene 10 auf dem Abtaster 12 des Bezugskörpers abgebildet wird.

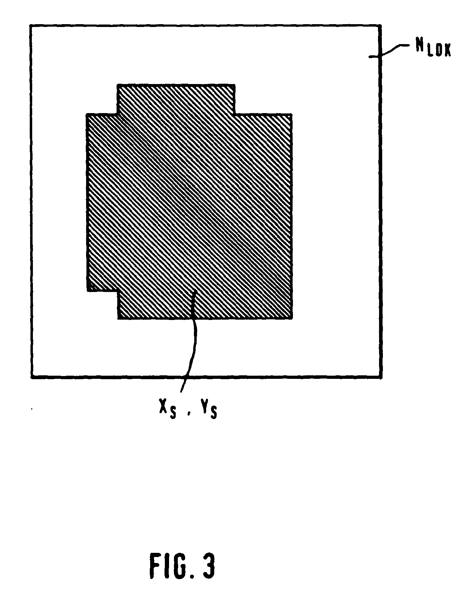

Da die Marken 16 eine endliche Ausdehnung besitzen, um durch unterschiedliche Breiten eine kodierte Information zu speichern, ist die auf der Projektionsebene eingenommene Fläche so groß, daß jeweils mehrere Pixel belegt werden. Dadurch ist es nicht möglich, die Koordinaten eines der Pixel als Abbildungskoordinaten zu verwenden. Vielmehr erfolgt rechnerisch eine Schwerpunktbildung, die anhand der Fig. 3 erläutert wird. Diese Figur zeigt einen vergrößerten Ausschnitt der Projektionsfläche. Dargestellt ist ein Suchbereich der mehrere Pixel umfaßt. An einer Stelle dieses Suchbereiches ist eine Marke 16 abgebildet. Die Bestimmung des Schwerpunktes dieser Marke 16 erfolgt nun nach den folgenden Formeln über eine Mittelwertbildung:

$$Xs = \frac{1}{NLok} * \sum_{i=1}^{NLok} Xi$$

$$Ys = \frac{1}{NLok} * \sum_{i=1}^{NLok} Yi$$

Man erhält auf diese Weise die exakte Angabe der Koordinaten der Schwerpunkte der Marken 16. Indem nun die Koordinaten der abgebildeten Punkte und die durch Dekodierung der Marken 16 gewonnenen Koordinaten der Originalpunkte auf dem Positionierkörper in die Gleichungen eingesetzt werden, können die Koordinaten des Projektionszentrums O und die Orientierungswinkel errechnet werden.

## Patentansprüche

1. Verfahren zur Lagebestimmung eines Positionierkörpers relativ zu einem Bezugskörper, wobei der Positionierkörper eine Maßstabsanordnung mit Marken (16) bekannter Koordinaten trägt und der Bezugskörper einen Abtaster (12) mit einer Projektionsfläche, auf die die Marken (16) des Maßstabs projiziert werden, sowie eine Abbildungsoptik aufweist, bei dem die Koordinaten des Projektionszentrums (O) der Abbildungsoptik aus den bekannten Koordinaten von Marken (16) auf der Maßstabsanordnung über die projektive Verwandtschaft zwischen der Projektionsfläche des Abtasters (12) und der Ebene (10) der Maßstabsanordnung berechnet werden, wobei die Marken (16) ihre Koordinateninformation bezüglich der Maßstabsanordnung in kodierter Form enthalten und für die Berechnung dekodiert werden, dadurch gekennzeichnet, daß eine Maßstabsanordnung aus zwei orthogonal zueinander ausgerichteten Flächenmaßstäben verwendet wird, daß die Marken (16) beider Flächenmaßstäbe jeweils Überschneidungsbereiche bilden und daß der Berechnung wenigstens vier eine Fläche begrenzende Schwerpunkte von Überschneidungsbereichen der Marken (16) beider Flächenmaßstäbe als bekannte Koordinaten von Marken (16) zugrundegelegt werden.

2. Verfahren nach Anspruch 1, dadurch gekennzeichnet, daß die Berechnung der Koordinaten $X_0$, $Y_0$, $Z_0$ des Projektionszentrums (O) und die Orientierungswinkel æ, $f$, w zwischen der Projektionsfläche des Abtasters (12) und der Ebene (10) der Maßstabsanordnung nach folgenden Funktionen und Gleichungen durchgeführt wird:

$$X_0 = a_3 - Z_0 * \left(\frac{\tan(\delta)}{c} * \sin(\sqrt{})\right)$$

$$Y_0 = b_3 - Z_0 * \left(\frac{\tan(\delta)}{c} * \cos(\sqrt{})\right)$$

$$Z_0 = \frac{\left(\frac{a_1}{c_1} - \frac{a_2}{c_2}\right)}{\left(\frac{k_2}{c_1} - \frac{k_5}{c_2}\right) * \cos(\sqrt{}) + \left(\frac{k_3}{c_1} - \frac{k_6}{c_2}\right) * \sin(\sqrt{})}$$

$$æ = \arctan\left(\frac{c_1}{c_2}\right)$$

$$f = \arctan\left(\frac{Z_0 * \tan(\delta) * \sin(\sqrt{})}{Z_0}\right)$$

$$w = \arctan\left(\frac{Z_0 * \tan(\delta) * \cos(\sqrt{})}{Z_0}\right)$$

mit

$$\delta = \arctan\left(-\frac{(c_1 + c_2) * c}{\sin(æ) + \cos(æ)}\right)$$

$$\sqrt{} = \arctan\left(\frac{k_5 * k_7 - k_2}{k_1 + k_2 - k_7 * (k_4 + k_6)}\right)$$

$$k_1 = c_1 * \frac{\tan(\delta)}{c}$$

$$k_2 = \frac{\cos(æ)}{c * \cos(\delta)}$$

$$k_3 = \frac{\sin(æ)}{c}$$

$$k_4 = c_2 * \frac{\tan(\delta)}{c}$$

$$k_5 = -\frac{\sin(æ)}{c * \cos(\delta)}$$

$$k_6 = \frac{\cos(æ)}{c}$$

$$k_7 = \frac{c_1 * a_3 - a_1}{c_2 * a_3 - a_2}$$

wobei æ der Orientierungswinkel zur Z-Achse, ƒ der Orientierungswinkel zur Y-Achse, w der Orientierungswinkel zur X-Achse, c die Kammerkonstante entsprechend dem Abstand zwischen dem Projektionszentrum (O) und dem Lotfußpunkt der Projektionsfläche sind und $a_1$, $a_2$, $a_3$, $b_3$, $c_1$, $c_2$ Transformationskonstanten darstellen.

3. Verfahren nach Anspruch 1 oder 2, <u>dadurch gekennzeichnet</u>, daß mehr als vier Schwerpunkte von Überschneidungsbereichen der Marken (16) beider Flächenmaßstäbe bestimmt werden und daß eine Ausgleichsrechnung vorgenommen wird.

4. Verfahren nach einem der Ansprüche 1 bis 3, <u>dadurch gekennzeichnet</u>, daß ausschließlich die überschneidungsbereiche der Marken (16) auf dem Abtaster (12) abgebildet werden.

5. Verfahren nach Anspruch 4, <u>dadurch gekennzeichnet</u>, daß die Überschneidungsbereiche der Marken (16) nach Koordinatenrichtung getrennt ausgewertet werden, indem nach dem Verfahren der Randverteilung die absoluten Häufigkeiten der Helligkeitswerte der Überschneidungsbereiche der Marken (16) in Spalten- und Zeilenrichtung der lichtempfindlichen Pixel (14) des Abtasters (12) bestimmt und mit einem Schwellwert verglichen werden und die über dem Schwellwert liegenden Häufigkeiten als die von den Marken (16) belegten Koordinaten gewertet werden.

6. Verfahren nach Anspruch 4 oder 5, <u>dadurch gekennzeichnet</u>, daß die Schwerpunkte der Überschneidungsbereiche der Marken (16) durch Mittelwertbildung in beiden Koordinatenrichtungen gewonnen werden, indem jeweils Pixelfelder (14) des Abtasters (12) als Suchfelder ausgewählt werden und in jedem Suchfeld die Koordinaten des Schwerpunktes Xs und Ys nach folgenden Gleichungen bestimmt werden:

$$Xs = \frac{1}{NLok} * \sum_{i=1}^{NLok} Xi$$

$$Ys = \frac{1}{NLok} * \sum_{i=1}^{NLok} Yi$$

wobei $N_{Lok}$ die Anzahl der Punkte im Pixelfeld (14) sind.

7. Vorrichtung zur Lagebestimmung eines Positionierkörpers relativ zu einem Bezugskörper, wobei der Positionierkörper eine Maßstabsanordnung mit Marken (16) bekannter Koordinaten trägt und der Bezugskörper einen Abtaster (12) mit einer Projektionsfläche, auf die die Marken (16) des Maßstabs projiziert werden, sowie eine Abbildungsoptik und einen Rechner aufweist, bei der die Koordinaten des Projektionszentrums (O) der Abbildungsoptik aus den bekannten Koordinaten von Marken (16) auf der Maßstabsanordnung über die projektive Verwandtschaft zwischen der Projektionsfläche des Abtasters (12) und der Ebene (10) der Maßstabsanordnung berechnet werden, wobei die Marken (16) ihre Koordinateninformation bezüglich der Maßstabsanordnung in kodierter Form enthalten und für die Berechnung dekodiert werden, <u>dadurch gekennzeichnet</u>, daß die Maßstabsanordnung eine Ebene (10) mit zwei orthogonal ausgerichteten Flächenmaßstäben umfaßt, auf der die Marken (16) beider Flächenmaßstäbe jeweils Überschneidungsbereiche bilden, und daß der Rechner so gesteuert ist, daß der Berechnung wenigstens vier eine Fläche begrenzende Schwerpunkte ($X_s$, $Y_s$) von Überschneidungsbereichen der Marken (16) beider Flächenmaßstäbe als bekannte Koordinaten von Marken (16) zugrundegelegt werden.

8. Vorrichtung nach Patentanspruch 7, <u>dadurch gekennzeichnet</u>, daß auf der die Marken (16) tragenden Ebene (10) der Maßstabsanordnung ausschließlich die Überschneidungsbereiche der Marken (16) beider Flächenmaßstäbe vorhanden sind.

**Claims**

1. Process for determining the location of a positioning body relative to a reference body, the positioning body carrying a scale arrangement with marks (16) of known coordinates and the reference body has a sensing device (12) with a projection surface, onto which are projected the marks (16) of the scale, as well as an imaging optics, in which the coordinates of the centre of projection (0) of the imaging optics are calculated from the known coordinates of the marks (16) on the scale arrangement via the projective relationship between the projection surface of the sensing device (12) and the plane (10) of the scale arrangement, the marks (16) containing their coordinate information relative to the scale arrangement in coded form and are decoded for the calculation, characterized in that use is made of a scale arrangement of two orthogonally oriented surface scales, that the marks (16) of both surface scales in each case form overlap areas and that the calculation is based on at least four centroids of overlap areas of the marks (16) of both surface scales defining a surface as known coordinates of marks (16).

**2.** Process according to claim 1, characterized in that the calculation of the coordinates X0, Y0, Z0 of the centre of projection (0) and the orientation angles ae, f, w between the projection surface of the sensing device (12) and the plane (10) of the scale arrangement is performed in accordance with the following functions and equations:

$$X0 = a3 - Z0 * \left(\frac{\tan(\delta)}{c} * \sin(\sqrt{})\right)$$

$$Y0 = b3 - Z0 * \left(\frac{\tan(\delta)}{c} * \cos(\sqrt{})\right)$$

$$Z0 = \frac{\left(\frac{a1}{c1} - \frac{a2}{c2}\right)}{\left(\frac{k2}{c1} - \frac{k5}{c2}\right) * \cos(\sqrt{}) + \left(\frac{k3}{c1} - \frac{k6}{c2}\right) * \sin(\sqrt{})}$$

$$ae = \arctan\left(\frac{c1}{c2}\right)$$

$$f = \arctan\left(\frac{Z0 * \tan(\delta) * \sin(\sqrt{})}{Z0}\right)$$

$$w = \arctan\left(\frac{Z0 * \tan(\delta) * \cos(\sqrt{})}{Z0}\right)$$

with

$$\delta = \arctan\left(-\frac{(c1 + c2) * c}{\sin(ae) + \cos(ae)}\right)$$

$$\sqrt{} = \arctan\left(\frac{k5 * k7 - k2}{k1 + k2 - k7 * (k4 + k6)}\right)$$

$$k1 = c1 * \frac{\tan(\delta)}{c}$$

$$k2 = \frac{\cos(ae)}{c * \cos(\delta)}$$

$$k3 = \frac{\sin(ae)}{c}$$

$$k4 = c2 * \frac{\tan(\delta)}{c}$$

$$k5 = -\frac{\sin(ae)}{c * \cos(\delta)}$$

$$k6 = \frac{\cos(ae)}{c}$$

$$k7 = \frac{c1 * a3 - a1}{c2 * a3 - a2}$$

in which ae is the orientation angle to the Z-axis, f the orientation angle to the Y-axis, w the orientation angle to the X-axis, c the calibrated principal distance corresponding to the distance between the centre of projection (0) and the foot of the perpendicular of the projection surface and a1, a2, a3, b3, c1, c2 are transformation constants.

**3.** Process according to claim 1 or 2, characterized in that more than four centroids of overlap areas of marks (16) of both surface scales are determined and that a compensating calculation is performed.

**4.** Process according to one of the claims 1 to 3, characterized in that exclusively the overlap areas of the marks (16) are imaged on the sensing device (12).

**5.** Process according to claim 4, characterized in that the overlap areas of the marks (16) are separately evaluated according to the coordinate direction, in that according to the marginal distribution method, the absolute frequencies of the brightness values of the overlap areas of the marks (16) in the row and column direction of the photosensitive pixels (14) of the sensing device (12) are determined and compared with a threshold value and the frequencies above the threshold value are evaluated as coordinates covered by the marks (16).

**6.** Process according to claim 4 or 5, characterized in that the centroids of the overlap areas of the marks (16) are obtained by averaging in both coordinate directions, in that in each case pixel fields (14) of the sensing device (12) are chosen as search fields and in each search field the coordinates of the centroid Xs and Ys are determined according to the following equations:

$$Xs = \frac{1}{NLok} * \sum_{i=1}^{NLok} Xi$$

$$Ys = \frac{1}{NLok} * \sum_{i=1}^{NLok} Yi$$

in which NLok is the number of points in the pixel field (14).

**7.** Apparatus for determining the location of a positioning body relative to a reference body, in which the positioning body carries a scale arrangement with marks (16) of known coordinates and the reference body has a sensing device (12) with a projection surface on which are projected the marks (16) of the scale, as well as an imaging optics and a computer, in which the coordinates of the centre of projection (0) of the imaging optics are calculated from the known coordinates of marks (16) on the scale arrangement via the projective relationship between the projection surface of the sensing device (12) and the plane (10) of the scale arrangement, the marks (16) containing their coordinate information with respect to the scale arrangement in coded form and are decoded for the calculation, characterized in that the scale arrangement covers a plane (10) with two orthogonally oriented surface scales, on which the marks (16) of both surface scales in each case form overlap areas, and that the computer is controlled in such a way that the calculation is based on at least four centroids (Xs, Ys) of overlap areas of the marks (16) of both surface scales defining a surface as known coordinates of marks (16).

8. Apparatus according to claim 7, characterized in that only the overlap areas of the marks (16) of both surface scales are present on the scale arrangement plane (10) carrying the marks (16).

**Revendications**

1. Procédé permettant de déterminer la position d'un corps de positionnement par rapport à un corps de référence, le corps de positionnement portant une échelle graduée comportant des repères (16) de coordonnées connues et le corps de référence comportant un dispositif de balayage (12) muni d'une surface de projection sur laquelle sont projetées les repères (16) de l'échelle, ainsi qu'une optique de représentation, dans lequel les coordonnées du centre de projection (O) de l'optique de représentation sont évaluées en partant des coordonnées connues des repères (16) sur l'échelle graduée par la transformée projective entre la surface de projection du dispositif de balayage (12) et le plan (10) de l'échelle, les repères (16) contenant leurs informations de coordonnées par rapport à l'échelle sous forme codée, <u>caractérisé en ce</u> qu'on utilise un échelle graduée à deux échelles planes orthogonales, que les repères (16) des deux échelles planes forment chacun des zones d'intersection et que, pour l'évaluation, au moins quatre barycentres de zones d'intersection des repères (16) des deux échelles planes délimitant une surface sont pris comme base de coordonnées connues des repères (16).

2. Procédé suivant la revendication 1, <u>caractérisé en ce</u> que le calcul des coordonnées X0, Y0, Z0 du centre de projection (O) et les angles d'orientation

æ, $f$, w entre la surface de projection du dispositif de balayage (12) et le plan (10) du échelle sont déterminés par les fonctions et les égalités suivantes:

$$X_0 = a_3 - Z_0 * (\frac{tg(\delta)}{c} * \sin(\sqrt{}))$$

$$Y_0 = b_3 - Z_0 * (\frac{tg(\delta)}{c} * \cos(\sqrt{}))$$

$$Z_0 = \frac{(\frac{a_1}{c_1} - \frac{a_2}{c_2})}{(\frac{k_2}{c_1} - \frac{k_5}{c_2}) * \cos(\sqrt{}) + (\frac{k_3}{c_1} - \frac{k_6}{c_2}) * \sin(\sqrt{})}$$

$$æ = arctg (\frac{c_1}{c_2})$$

$$f = arctg (\frac{Z_0 * tg (\delta) * \sin(\sqrt{})}{Z_0})$$

$$w = arctg (\frac{Z_0 * tg(\delta) * \cos(\sqrt{})}{Z_0})$$

avec

$$\delta = arctg (- \frac{(c_1 + c_2) * c}{\sin(æ) + \cos(æ)})$$

$$\sqrt{} = arctg (\frac{k_5 * k_7 - k_2}{k_1 + k_2 - k_7 * (k_4 + k_6)})$$

$$k_1 = c_1 * \frac{tg(\delta)}{c}$$

$$k_2 = \frac{\cos(æ)}{c * \cos(\delta)}$$

$$k_3 = \frac{\sin(æ)}{c}$$

$$k_4 = c_2 * \frac{tg(\delta)}{c}$$

$$k_5 = - \frac{\sin(æ)}{c * \cos(\delta)}$$

$$k_6 = \frac{\cos(æ)}{c}$$

$$k_7 = \frac{c_1 * a_3 - a_1}{c_2 * a_3 - a_2}$$

où æ est l'angle d'orientation pour l'axe Z, $f$ l'angle d'orientation pour l'axe Y, w l'angle d'orientation pour l'axe X, c la constante de chambre correspondant à la distance entre le centre de projection (O) et le pied de la verticale de la surface de projection, et a1, a2, a3, b3, c1, c2 représentent des constantes de transformation.

3. Procédé suivant la revendication 1 ou 2, <u>caractérisé en ce</u> que plus de quatre barycentres de zones d'intersection des repères (16) des deux échelles planes sont déterminés et en ce qu'on procède à un calcul de compensation.

4. Procédé suivant l'une des revendications 1 à 3, <u>caractérisé en ce</u> que, exclusivement, les zones d'intersection des repères (16) sont représentées sur le dispositif de balayage (12).

5. Procédé suivant la revendication 4, <u>caractérisé en ce</u> que les zones d'intersection des repères (16) sont évaluées séparément d'après la direction des coordonnées, dans lequel, après le procédé de distribution asymptotique, les fréquences absolues des luminosités des pixels photosensibles (14) du dispositif de balayage (12) pour les zones d'intersection des repères (16) sont déterminées en colonnes et en lignes, et comparées à un seuil, et les fréquences dépassant le seuil sont évaluées comme coordonnées occupées par les repères (16).

6. Procédé suivant la revendication 4 ou 5, <u>caractérisé en ce</u> que les barycentres des zones d'intersection des repères (16) sont obtenus par formation de moyenne dans les deux directions de coordonnées, dans lequel, suivant le cas, les champs de pixels (14) du dispositif de balayage (12) sont évalués comme champs de recherche et, dans chaque champ de recherche, les coordonnées du barycentre Xs et Ys sont déterminés par les équations suivantes:

$$Xs = \frac{1}{NLok} * \sum_{i=1}^{NLok} Xi$$

$$Ys = \frac{1}{NLok} * \sum_{i=1}^{NLok} Yi$$

où Nlok est le nombre de points dans le champ de pixel (14).

7. Dispositif permettant de déterminer la position d'un corps de positionnement par rapport à un corps de référence, le corps de positionnement portant une échelle graduée comportant des repères (16) de coordonnées connues et le corps de référence comportant un dispositif de balayage (12) muni d'une surface de projection sur laquelle sont projetées les repères (16) de l'échelle, ainsi qu'une optique de représentation, dans lequel les coordonnées du centre de projection (O) de l'optique de représentation sont évaluées en partant des coordonnées connues des repères (16) sur l'échelle graduée par la transformée projective entre la surface de projection du dispositif de balayage (12) et le plan (10) de l'échelle, les repères (16) contenant leurs informations de coordonnées par rapport à l'échelle sous forme codée, <u>caractérisé en ce</u> que l'échelle graduée comprend un plan (10) comportant deux échelles planes orthogonales sur lesquelles les repères (16) des deux échelles planes forment respectivement des zones d'intersection, et en ce que le calculateur est commandé de façon que, pour l'évaluation, au moins quatre barycentres (Xs, Ys) de zones d'intersection des repères (16) des deux échelles planes, qui limitent une surface, sont pris comme base de coordonnées connues des repères (16).

8. Procédé suivant la revendication 7, <u>caractérisé en ce</u> que, sur le plan (10) de l'échelle portant les repères (16), sont exclusivement présentes les zones d'intersection des repères (16) des deux échelles planes.

FIG.1

FIG. 2

FIG. 3